**Europäisches Patentamt**

**European Patent Office**

**Office européen des brevets**

(19)

(11) Veröffentlichungsnummer: **0 070 582**
**A2**

# (12) EUROPÄISCHE PATENTANMELDUNG

(21) Anmeldenummer: **82200779.5**

(22) Anmeldetag: **23.06.82**

(51) Int. Cl.³: **A 01 G 25/02**

(30) Priorität: **16.07.81 DE 3128207**

(43) Veröffentlichungstag der Anmeldung: **26.01.83**
**Patentblatt 83/4**

(84) Benannte Vertragsstaaten: **AT BE CH DE FR GB IT LI NL**

(71) Anmelder: **UNILEVER NV, Burgemeester s'Jacobplein 1 P.O. Box 760, NL-3000 DK Rotterdam (NL)**

(84) Benannte Vertragsstaaten: **BE CH DE FR IT LI NL AT**

(71) Anmelder: **UNILEVER PLC, Unilever House Blackfriars P O Box 68, London EC4P 4BQ (GB)**

(84) Benannte Vertragsstaaten: **GB**

(72) Erfinder: **Tjaden, Jan, Vorwaldstrasse 41, D-8961 Durach-Bechen (DE)**

(74) Vertreter: **Hartong, Richard Leroy et al, Unilever N.V. Patent Division P.O. Box 137, NL-3130 AC Vlaardingen (NL)**

(54) **Bewässerungsschlauch aus Kunststoff und Verfahren zu dessen Herstellung.**

(57) Ein Bewässerungsschlauch, hergestellt aus wenigstens einer entlang wenigstens einer Längsnaht verschweissten Kunststoffflachfolie, ist mit Löchern versehen, welche durch einen oder mehrere mit dem Schlauch (auf der Aussenseite des Schlauches) verschweissten Folienstreifen abgedeckt sind. Die Schweissverbindungen des Folienstreifens oder der Folienstreifen mit der Flachfolie liegen in der aufgeschlagenen Flachfolie zwischen den Stellen, wo die Längsnaht oder Längsnähte angebracht wird bzw. werden.

BEWAESSERUNGSSCHLAUCH AUS KUNSTSTOFF UND VERFAHREN ZU DESSEN HERSTELLUNG

Die Erfindung betrifft einen Bewässerungsschlauch aus Kunststoff, hergestellt aus wenigstens einer entlang wenigstens einer Längsnaht verschweissten Flachfolie, die mit Löchern versehen ist, welche durch einen oder mehrere mit dem Schlauch verschweissten Folienstreifen abgedeckt sind, sowie ein Verfahren zu dessen Herstellung

Der Einsatz von Kunststoffbewässerungsschläuchen ist einfacher und wirtschaftlicher als von Rohrleitungen aus Metall, denn neben dem geringeren Gewicht ist der Kunststoff korrosionsfest und flexibel. Der leichte Kunststoffschlauch kann ohne grossen Arbeitsaufwand und ohne Verwendung von Werkzeugen verlegt werden. Kunststoffschläuche ermöglichen erst die modernen Tropfenbewässerungen, mit deren Hilfe extreme Standorte, wie die ariden Zonen oder steinige Böden im Mittelmeerraum für landwirtschaftliche Nutzung erschlossen, zumindest aber beträchtliche Einsparungen an Wasser und Arbeitskraft erzielt werden. Die Einsparung des dort kostbaren Wassers kann durch die gesteuerte Zufuhr gemäss dem tatsächlichen Wasserbedarf bis 50% betragen. Zur Erzielung optimaler Wachstumsbedingungen muss nur etwa ein Drittel des durchwurzelten Bodenvolumens durchfeuchtet werden, so dass die Zwischenräume begehbar bleiben und (im Gegensatz zu herkömmlichen Bewässerungssystemen) ohne Gefahr von Bodenverdichtungen die erforderlichen Arbeiten durchgeführt werden können. Fachleute heben bei der gesteuerten Bewässerung mit Kunststoffschläuchen an Vorteilen heraus:

(a) Weil die Bewässerungssysteme mit geringem Druck arbeiten, können grössere Flächen zur gleichen Zeit bewässert werden.

(b) Die Bewässerungsqualität wird verbessert. Das austropfende Wasser versickert, ohne den Boden zu verschlämmen, im Wurzelbereich der Pflanzen. Es entstehen kaum Verluste durch unproduktives Verdunsten oder durch Oberflächenabfluss.

(c) Die Wasserzufuhr kann entsprechend dem sich verändernden Bedarf während des Wachstums der Pflanzen optimal dosiert werden. Es können dem Wasser auch Kunstdünger in Lösung beigegeben werden.

(d) Tropfenbewässerung ist im Gegensatz zur Beregnung mit Wasserkanonen auch in Hanglagen möglich.

Es ist deshalb eine ganze Reihe von Bewässerungsschläuchen verschiedener Konstruktion vorgeschlagen worden. So wird in der DE-OS 24 37 730 durch Schweissung entlang einer oder zwei Längsnähten von vorgelochten Flachfolienstreifen ein Bewässerungsschlauch hergestellt. Es werden dort drei Folienstreifen verwendet, von denen der mittlere perforierte Streifen einen inneren Lappen bildet, welcher durch den Innendruck des Wassers gegen die obere Hälfte des Schlauches gepresst wird, so dass die Austrittsöffnungen in der oberen Hälfte des Schlauches abgeschlossen werden sollen. In dieser Weise soll bei unterschiedlichen Wasserdrücken ein gleichmässiger Wasseraustritt erhalten werden. Das vorgeschlagene Regelsystem kann in der Praxis nicht funktionieren, da sich zwischen dem inneren Lappen und der Schlauchaussenwand keine Druckdifferenz einstellt. Darüber hinaus wird beim Verschweissen von drei Flachfolien aufeinander nicht immer eine gute fehlerfreie Schweiss-. naht erhalten.

In der FR-PS 23 20 520 wird ein Bewässerungsschlauch aus Kunststoff beschrieben, welcher aus nur einer Flachfolie hergestellt wird, und wobei die Austrittsöffnungen mit Verstärkungsringen und mit einer Ablenklasche, in Form eines um den Schlauch herumlaufenden Folienstreifens, der in der Längsnaht des Schlauches mit angeschweisst ist, versehen sind. Ein derartiger Bewässerungsschlauch kann jedoch kaum in wirtschaftlicher Weise hergestellt werden, da die Verschweissung von abwechselnd zwei und vier Folienlagen in der Praxis nahezu ummöglich ist und nicht zu zuverlässigen Schweissnähten führen kann. Auch das Anbringen von Verstärkungsringen um die Austrittsöffnungen wäre ein sehr arbeitsintensives Verfahren und mit den dargestellten und beschriebenen Ringen technisch nicht möglich.

Aufgabe der vorliegenden Erfindung ist, in einem einfachen und wirtschaftlichen Verfahren einen kostengünstigen und funktionsgerechten Bewässerungsschlauch aus Kunststoffolie herzustellen, wobei die erwähnten Nachteile der bekannten Bewässerungsschläuche und ihrer Herstellungsverfahren vermieden werden.

Diese Aufgabe wird durch die anmeldungsgemässe Erfindung dadurch gelöst, dass sie einen Bewässerungsschlauch aus Kunststoff schafft, hergestellt aus wenigstens einer entlang wenigstens einer Längsnaht verschweissten Flachfolie, die mit Löchern versehen ist, welche durch einen oder mehrere mit dem Schlauch verschweissten Folienstreifen abgedeckt sind, welcher

4

dadurch gekennzeichnet wird, dass die Schweissverbindungen des Folienstreifens oder der Folienstreifen mit
der Flachfolie innerhalb der projizierten Fläche des
Schlauches und innerhalb der Längsnähte angebracht
werden und der bzw. die Folienstreifen auf der Aussenseite des Schlauches angeordnet ist bzw. sind.

Vorzugsweise sind die Folienstreifen durch zwei einander gegenüberliegende Schweissnähte befestigt, so dass
sie die Löcher überbrückend abdecken.
In dieser Ausführungsform liegen die zwei einander gegenüberliegenden Schweissnähte der Folienstreifen quer
zur Längsachse des Schlauches.  In anderen Ausführungsformen können die zwei einander gegenüberliegenden
Schweissnähte der Folienstreifen parallel zueinander,
jedoch schräg zur Längsachse des Schlauches liegen,
oder können die Schweissnähte aus zwei diagonalsweise
einander gegenüberliegenden Schweisspunkten bestehen.

Falls zwei Flachfolien verwendet werden, können sie
beide gelocht sein, jedoch ist vorzugsweise nur eine
Flachfolie, und zwar diejenige, die später die obere
Hälfte des Bewässerungsschlauches bilden wird, gelocht.
Die Löcher können in einem regelmässigen oder unregelmässigen Muster im Schlauch gemacht werden.  Der
Folienstreifen kann ein oder mehrere Löcher überbrücken
oder abdecken.

Die erfindungsgemässe Anordnung des Folienstreifens
oder der Folienstreifen bewirkt vorteilhaft, dass die
Spülwirkung eines frei austretenden Wasserstrahles gedämpft wird und dass das Wasser nur tropfend über einen
grösseren Bereich austritt, so dass die Befeuchtung der
Erde gleichförmiger und damit wirkungsvoller erfolgt
als bei den Bewässerungsschläuchen nach dem Stand der
Technik.

Die erfindungsgemässen Ausführungsformen ergeben gegenüber den bekannten Ausführungsformen eine erhebliche Materialersparnis.

Der Schlauch kann aus beliebigen Kunststoffen hergestellt werden, welche das Aufwickeln gestatten, anderseits genügende Festigkeit aufweisen müssen, damit sie die übliche Behandlung in der Landwirtschaft, wie z.B. ein Verschleppen über steinige Böden, erleiden können. Geeignete Kunststoffe sind z.B. die Polyolefine, wie Polyäthylen, Polybutylen und Olefincopolymere. Wenn der Schlauch aus zwei Flachfolien hergestellt ist, können die beiden Folien aus verschiedenen Kunststoffen bestehen und die Folien verschieden gefärbt sein.

Weitere Vorteile, Merkmale und Anwendungsmöglichkeiten der vorliegenden Erfindung ergeben sich aus der folgenden Beschreibung im Zusammenhang mit den Zeichnungen. Es zeigen:

Fig. 1 schematisch und perspektivisch eine bevorzugte Ausführungsform des Schlauches, wobei besonders die Anordnung des Folienstreifens herausgestellt ist,

Fig. 2 eine Draufsicht des flachgelegten Schlauches,

Fig. 3 einen Querschnitt des Schlauches gemäss Fig. 2,

Fig. 3a als Einzelheit einen vergrösserten Querschnitt durch ein Loch und die Unterseite des flachgelegten Schlauches,

Fig. 4 perspektivisch eine andere Ausführungsform mit durchgehendem Folienstreifen.

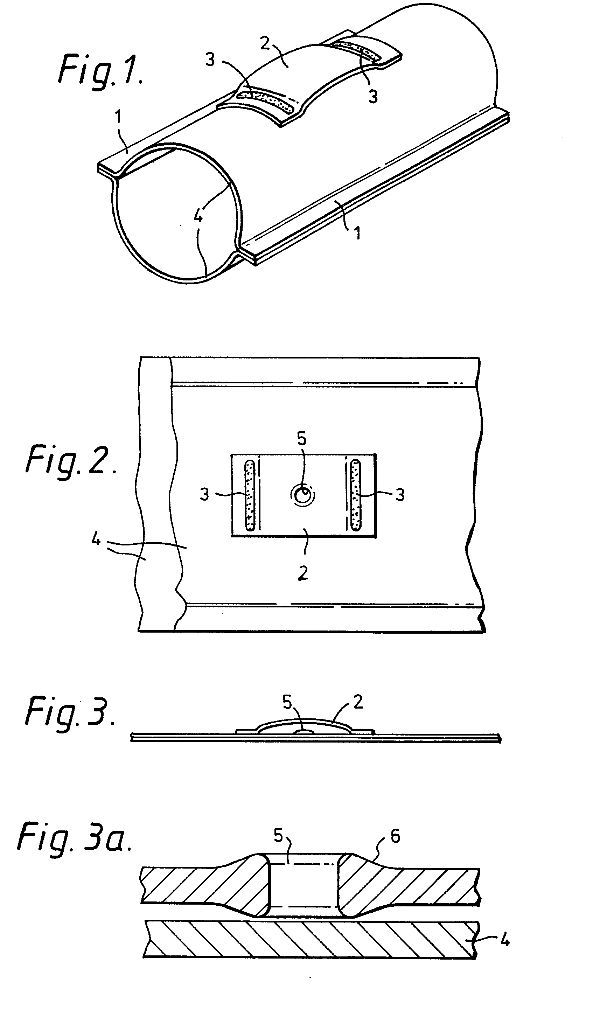

Figur 1 ist eine Darstellung eines Teiles des Bewässerungsschlauches in einer bevorzugten Ausführungsform in geschwollenem Zustand durch den Innendruck des zugeführten Wassers im Schlauch. Dabei sind (1) die Längsnähte des Schlauches, welcher durch zwei Flachfolien (4) gebildet wird und (3) die einander gegenüberliegenden Schweissnähte des Folienstreifens (2).

Figur 2 zeigt ein Aufsichtsbild des Schlauches aus zwei Flachfolien(4), wobei das Loch (5) unter dem Folienstreifen (2) mit einer gestrichelten Linie wiedergegeben ist.

In den Figuren 3 und 3a wird ein Scnitt durch den flachgelegten Schlauch beim Loch (5) gezeigt, wobei die Materialverdickung (6) bei den Rändern deutlich angegeben worden ist.

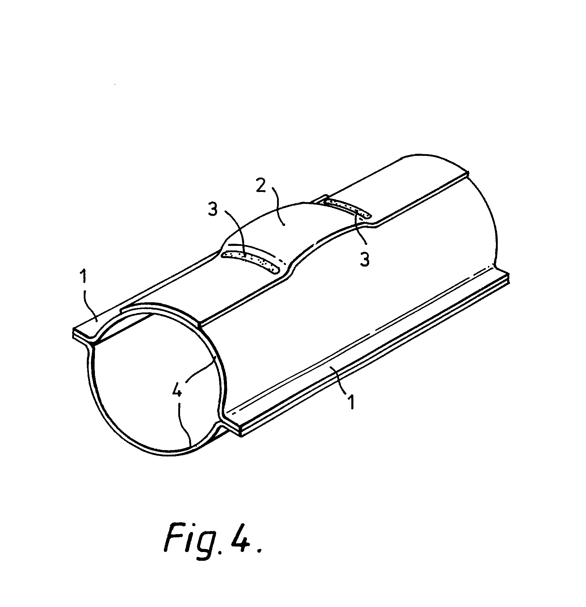

Figur 4 ist eine Darstellung eines Teiles des Bewässerungsschlauches in einer anderen Ausführungsform in geschwollenem Zustand durch den Innendruck des zugeführten Wassers im Schlauch. Dabei sind (1) die Längsnähte des Schlauches und (3) die Schweissnähte des Folienstreifens (2), der die Löcher (5) zur linken und rechten Seite der Schweissnähte (3) überdeckt. Bei dieser Ausführungsform kann gegebenenfalls das Material des Folienstreifens aus einer anderen Art Kunststoff als das Material des Schlauches bestehen. Gegebenenfalls können die Folienstreifen auch aus Verbundmaterial bestehen.

In der in Figuren 1 und 4 angegebenen Ausführungsform kann der Folienstreifen (2) immer symmetrisch über dem Loch (5) oder den Löchern (5) positioniert werden. Bei der Anordnung der Lasche oder des Folienstreifens (2) laut Figur 1 hat man den Vorteil, dass die Lasche an ihren beiden Längsseiten aufgespreizt wird, sobald sich der Schlauch füllt. Damit wird der Wasseraustritt

ti 2337 (R)

lagerunabhängig, ist also auch gesichert - im Falle dass der Schlauch nur an einer Seite Löcher aufweist - wenn der Schlauch versehentlich mit den Oeffnungen nach unten verlegt wird.

Im übrigen soll der Schlauch in gewissen Abständen mit Drahtbügeln im Boden festgesteckt werden, damit er vom Wind nicht verschoben werden kann. Die Folienstreifen können nach bestimmten Strecken in einer beliebigen Farbe ausgeführt sein, so dass diese Streifen eine Distanzangabe bilden.

Falls der erfindungsgemässe Schlauch aus zwei flachen Kunststoffbahnen hergestellt wird, die entlang zwei Längsnähten verschweisst sind, kann er trotz der Anwesenheit der Folienstreifen problemlos aufgewickelt werden, was gegenüber starkwandigen Rohren einen erheblichen Vorteil bietet.

Die Lochabstände in dem Bewässerungsschlauch werden dem Pflanzentyp angepasst und betragen beispielsweise für Tomaten 0,6 m und für Zuckerrohr 1,5 m. Die Lochung wird in solcher Weise ausgeführt, dass die Ränder eine Materialverdickung erfahren, womit zum einen vermieden wird, dass Risse von hier ihren Anfang nehmen, und zum anderen eine Düsenwirkung bewirkt wird, d.h. keine Strahleinschnürung des austretenden Wassers auftritt. Die Löcher mit exaktem Durchmesser (z.B. 1,30 mm Diameter) werden durch einen auf die Flachfolie geschweissten, durchgehenden Folienstreifen und vorzugsweise durch einzelne, die Löcher überbrückende Folienstreifen abgedeckt. Diese bevorzugten Folienstreifen sind derart auf die obere Folie geschweisst, dass die zwei entgegengesetzten Schweissnähte des Streifens

8

zwischen den zwei Längsnähten des Schlauches liegen.
Durch diese Anordnung behält die Abdeckung immer ihren
vorgegebenen Abstand und das Wasser sickert auch bei
unterschiedlichem Förderdruck gleichmässig aus. Es ist
klar, dass die Anzahl und der Durchmesser der Löcher
beliebig variiert werden kann. So können die Löcher
z.B. auch in Gruppen verteilt sein.

Das erfindungsgemässe Verfahren zur Herstellung eines
Bewässerungsschlauches aus wenigstens einer Flachfolie
gemäss der Erfindung wird dadurch gekennzeichnet, dass
Löcher und Folienstreifen auf derselben Arbeitsstation
gleichzeitig an einer Flachfolie angebracht werden und
darauf diese Flachfolie nach Längsfalten mit sich
selbst bzw. mit einer zweiten Flachfolie verschweisst
wird.

In dem Herstellunsverfahren wird z.B. mindestens eine
Flachfolie, welche später z.B. die obere Hälfte des
Schlauches bilden wird, zuerst in der gewünschten Weise
perforiert. Darauf wird der Folienstreifen abdeckend
(bei der Ausführungsform von Figur 4) oder werden die
Folienstreifen überbrückend über die Löcher geschweisst (in der Ausführungsform nach Figur 1).
Schliesslich werden die beiden Flachfolien entlang zwei
Längsnähten zu einem Schlauch verschweisst.

Durch das erfindungsgemässe Verfahren wird der Bewässerungsschlauch kontinuierlich mit hoher Geschwindigkeit
in einem Ablauf hergestellt und dieser Bewässerungsschlauch bietet mit minimalem Materialeinsatz und
funktionsgerechter Ausführung der geschilderten Details
die Voraussetzung für die Ausweitung der Tropfenbewässerung mit ihren Chancen für die Intensivierung der
Landwirtschaft in trockenen Gebieten.

UNILEVER N.V.

Burgemeester s'Jacobplein 1

Rotterdam / Niederlande

U 2337 (R)

PATENTANSPRUECHE

1. Bewässerungsschlauch aus Kunststoff, hergestellt aus wenigstens einer entlang wenigstens einer Längsnaht verschweissten Flachfolie, die mit Löchern versehen ist, welche durch einen oder mehrere mit dem Schlauch verschweissten Folienstreifen abgedeckt sind, dadurch gekennzeichnet, dass die Schweissverbindungen des Folienstreifens oder der Folienstreifen mit der Flachfolie innerhalb der projizierten Fläche des Schlauches und innerhalb der Längsnähte angebracht werden und der bzw. die Folienstreifen auf der Aussenseite des Schlauches angeordnet ist bzw. sind.

2. Bewässerungsschlauch nach Anspruch 1, dadurch gekennzeichnet, dass die Folienstreifen durch zwei einander gegenüberliegende Schweissnähte befestigt sind.

J 2337 (R)

3. Bewässerungsschlauch nach Anspruch 2, dadurch gekennzeichnet, dass die zwei einander gegenüberliegenden Schweissnähte des Folienstreifens quer zur Längsachse des Schlauches liegen.

4. Bewässerungsschlauch nach Anspruch 2, dadurch gekennzeichnet, dass die zwei einander gegenüberliegenden Schweissnähte des Folienstreifens parallel zueinander und schräg zur Längsachse des Schlauches liegen.

5. Bewässerungsschlauch nach Anspruch 2, dadurch gekennzeichnet, dass die zwei einander gegenüberliegenden Schweissnähte des Folienstreifens aus zwei diagonalsweise einander gegenüberliegenden Schweisspunkten bestehen.

6. Verfahren zur Herstellung eines Bewässerungsschlauches aus wenigstens einer Flachfolie nach einem der Ansprüche 1 bis 5, dadurch gekennzeichnet, dass Löcher und Folienstreifen auf derselben Arbeitsstation gleichzeitig an einer Flachfolie angebracht werden und darauf diese Flachfolie mit sich selbst verschweisst - nach vorhergehendem Längsfalten - bzw. mit einer zweiten Flachfolie verschweisst wird.

1/2

Fig.1.

Fig.2.

Fig.3.

Fig.3a.

0070582

Fig. 4.